# EUROPEAN PATENT SPECIFICATION

(11) **EP 1 269 115 B1**
(45) Date of publication and mention of the grant of the patent: **13.08.2008**
(21) Application number: 01916347.6
(22) Date of filing: 02.03.2001
(51) Int. Cl.: G01B 11/26, G08B 5/00, G08B 1/08, H04B 10/00, G08C 17/02

(54) **BATTERY MODULE TRANSCEIVER FOR EXTENDING THE RANGE OF AN INFRARED REMOTE CONTROLLER**
BATTERIEMODUL-SENDER/EMPFÄNGER ZUR VERGRÖSSERUNG DER REICHWEITE EINER INFRAROT-FERNBEDIENUNG
EMETTEUR-RECEPTEUR DE MODULE DE PILE DESTINE A ETENDRE LA PORTEE D'UNE TELECOMMANDE A INFRAROUGE

(30) Priority: 03.03.2000 US 186884 P
(43) Date of publication of application: 02.01.2003
(73) Proprietor: Thomas, Truett S., Defuniak Springs, FL 32435 (US)
(72) Inventor: Thomas, Truett S., Defuniak Springs, FL 32435 (US)
(74) Representative: Becker Kurig Straus
(86) International application number: PCT/US2001/006723
(87) International publication number: WO 2001/067040

(56) References cited:
- WO-A-99/57698
- US-A- 5 268 734
- US-A- 5 383 044
- US-A- 5 677 895
- US-A- 5 917 425
- US-A- 5 999 294

## Description

### TECHNICAL FIELD

The present invention relates generally to a transceiver in the form factor of a battery module for extending the range of operation of existing infrared remote controls.

### BACKGROUND ART

Typical infrared remote controls for devices such as televisions, stereo systems, satellite receivers, VCRs, laser disk players and the like are limited to line of sight operations restricting the location of the user. Furthermore, one or several batteries are installed within the conventional infrared remote controls for providing power to the infrared remote control.

There are several products that detect the infrared (IR) signal and convert it into radio waves. This allows a user to carry the IR remote control to different rooms to operate the device. Some of these products attach to the remote control covering the IR emitter located on the remote control. This blocks the IR signal from being emitted from the remote control. Others of these products use a separate transceiver/repeater making it necessary to point the remote control at the repeater and limiting use of the remote control to just the room where the repeater is located and the room where the device being controlled is also located.

The document US 5,677,895 discloses a system for controlling devices like VCRs etc. The system includes a cordless telephone and an associated base unit being in RF communication therewith. The cordless telephone and the base unit both comprise an IR transceiver and an RF transceiver and are arranged to control the devices, either via the IR transceiver or the RF transceiver.

The document WO 99/57698 discloses a system for extending the effective range of a base unit to control devices. The base unit is connected with a wireless network comprising a wireless repeater. Commands from the base unit can be output via the network to devices via RF, IR or direct links.

### DISCLOSURE OF INVENTION

It is an objective of the present invention to provide a battery module transceiver for extending the range of operation of existing infrared remote controls.

For obtaining the above-identified objective, the present invention provides a battery form factor transceiver module according to claim 1, a system according to claim 9, and a method according to claim 17.

A battery module form factor transceiver according to the invention for extending the operational range of an infrared remote controller comprises a battery power supply and a first transceiver. The first transceiver further has a first detector for detecting radio frequency pulses accompanying an infrared signal generated from the infrared remote controller and a transmitter for generating a radio frequency signal in response to the radio frequency pulses.

The size and outward construction of the battery module transceiver is the same as that of the conventional battery so that the battery module transceiver can fit in the battery chamber of the infrared remote controller. Therefore, this allows a user to install the battery module transceiver into the infrared remote controller battery chamber and detect the RF in and around the conventional infrared remote controller.

A second device is installed for receiving the above signal made by the remote controller. This device comprises a second transceiver having a second detector for receiving the radio frequency signal, and an infrared emitter for generating an infrared signal in response to the received radio frequency signal to operate the original infrared controlled device, such as TV, satellite receivers, or the like.

### BRIEF DESCRIPTION OF DRAWINGS

The above as well as other advantages of the present invention will become readily apparent to those skilled in the art from the following detailed description of a preferred embodiment when considered in the light of the accompanying drawings in which:
Fig. 1 schematically depicts a block diagram of an extending apparatus in accordance with one preferred embodiment of the present invention;
Fig. 2 schematically depicts a detailed block diagram of the battery module transceiver 5 having a first transceiver 52 and a battery power supply 51 of fig. 1;
Fig. 3 schematically depicts a detailed block diagram of the second transceiver 6 of fig. 1;
Fig. 4 is a perspective view of an existing infrared remote control and a battery module transceiver 5 in accordance with the present invention;
Fig. 5 is a perspective view of the battery module transceiver 5 of fig. 4 wherein the first transceiver 52 is removed;
Fig. 6 is a perspective view of the housing 55 of the battery module transceiver 5 in accordance with the present invention; and
Fig. 7 is a perspective view of another example of a battery module transceiver 5 in accordance with the present invention.

### BEST MODE FOR CARRYING OUT THE INVENTION

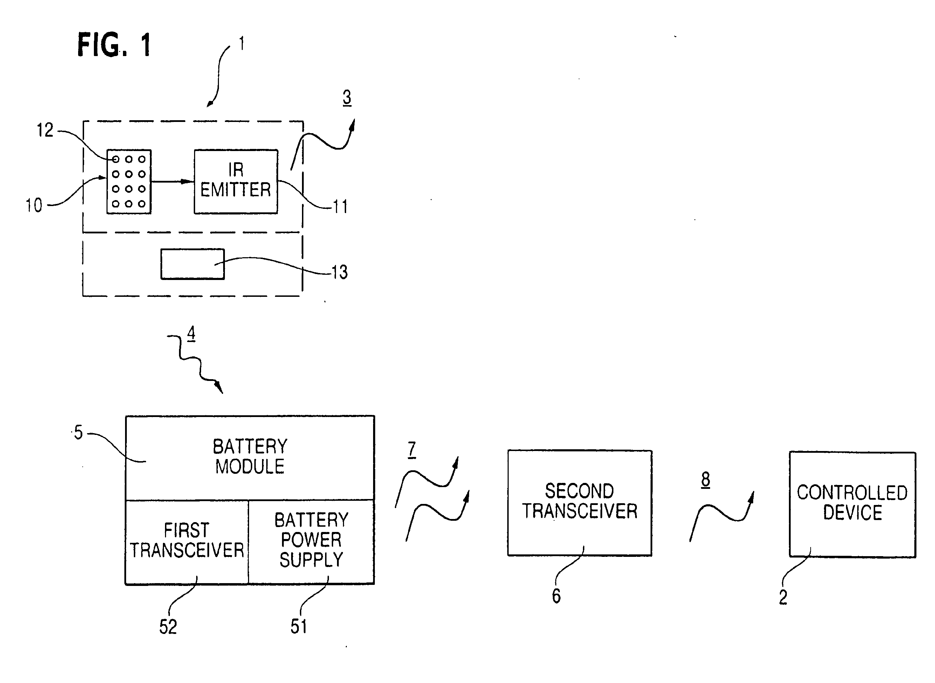

With reference to Fig. 1, the block diagram of an extending apparatus in accordance with one preferred embodiment of the present invention is schematically illustrated, where an infrared (IR) remote controller 1 and a controlled device 2 is included. The IR remote controller 1 is used to control the operation of the controlled device 2, such as a television, a stereo system, a satellite receiver, a VCR, a laser disk player or the like.

Referring to Fig. 1, the IR remote controller 1 is provided with a keypad 10, an IR emitter 11 and battery chamber 13. The keypad 10 includes one or more buttons 12, when pressed, to actuate the emission of an IR signal 3 from the IR emitter 11. The battery chamber 13 usually contains one or several compartments for receiving several AA-sized or AAA-sized batteries within the infrared remote control 1 to provide power to the same.

The controlled device 2 is sensitive to the IR signal 3 and controlled thereby. However, as well known in the art, the IR remote controller 1 must be within a line of sight of the controlled device 2 to operate it. For overcoming such a restriction, the present invention provides the extending apparatus to extend the operational range of an IR remote control system. As shown in fig. 1, the apparatus comprises a battery module transceiver 5 having a first transceiver 52 and battery power supply 51 that is inserted into the battery chamber 13 of the IR remote controller 1, and a second transceiver 6 that is adjacent to the controlled device 2.

It is noted that radio frequency (RF) pulses 4 of about 30-50 kHz accompanying the emission of the IR signal 3 will be radiated all around the IR remote controller 1 which is representative of the IR signal 3. According to the present invention, the battery module transceiver 5 is used to detect the RF pulses 4 irradiated all around the remote controller 1 when it is activated. Upon detection of the RF pulses 4 from the IR remote controller 1, the battery module transceiver 5 generates an RF signal 7 to be received by the second transceiver 6. The RF signal 7 is representative of the IR signal 3 emitted from the IR remote controller 1. The second transceiver 6 thereafter converts the received RF signal to an IR signal 8 which corresponds to the IR signal 3 emitted from the IR remote controller 1 and thus controls the operation of the controlled device 2. It should be noted that the frequency range of the radiated RF pulses 4 varies with the IR signal 3, but it should not be construed to limit the scope of the present invention.

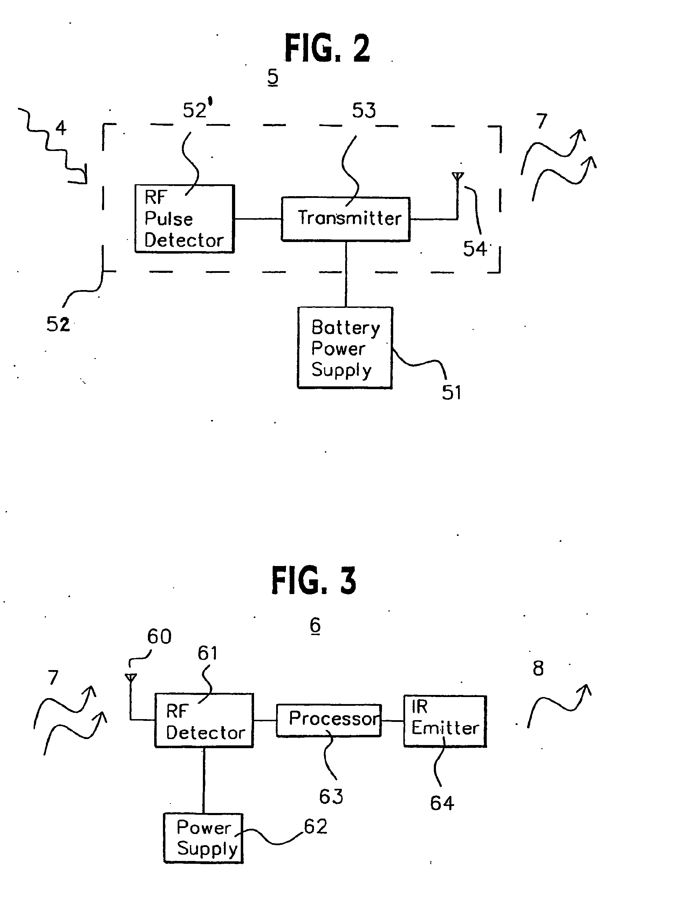

Referring to Fig. 2, the detailed block diagram of the battery module transceiver 5 is schematically illustrated. The battery module transceiver 5 comprises a first transceiver 52 and a battery power supply 51. The first transceiver 52 includes, as illustrated in fig. 2, an RF pulse detector 52', a transmitter 53, and a first antenna 54. The RF pulse detector 52' detects the RF pulses 4 representative of the IR signal 3 emanating from all around the IR remote controller 1 when it is activated. The RF pulse detector 52' is connected to an input of the transmitter 53 powered by the battery power supply 51. An output of the transmitter 53 is connected to the first antenna 54. Upon detection of the RF pulses 4 from the IR remote controller 1, the RF pulse detector 52' activates the transmitter 53 to generate the RF signal 7 representative of the IR signal 3 from the first antenna 54. The RF signal 7 representative of the IR signal 3 can be of any suitable signal strength and frequency, modulated or unmodulated, coded or uncoded. For example, the RF signal 7 could be in the UHF range.

Referring to fig. 3, the detailed block diagram of the second transceiver 6 is schematically illustrated. The second transceiver 6 includes a second antenna 60, an RF detector 61, a power supply 62, a signal processor 63, and an IR emitter 64. The RF signal 7 is received at the second transceiver 6 by the second antenna 60. The second antenna 60 is connected to an input of the RF detector 61 powered by the power supply 62 representing a battery or house current. The RF detector 61 is connected to an input of the signal processor 63 that controls the IR emitter 64 for generating the IR signal 8 representative of the IR signal 3 to the controlled device 2. The second transceiver 6 should be placed within a line of sight of the controlled device 2, which is sensitive to the IR signal 8 and controlled thereby. Note that the IR signal 8 corresponds to the IR signal 3 generated from the IR remote controller 1. In an alternative embodiment, the battery module transceiver 5 can be also installed within the second transceiver 6 for generating the corresponding IR signal 8 while the RF signal 7 is received and providing power for the second transceiver 6.

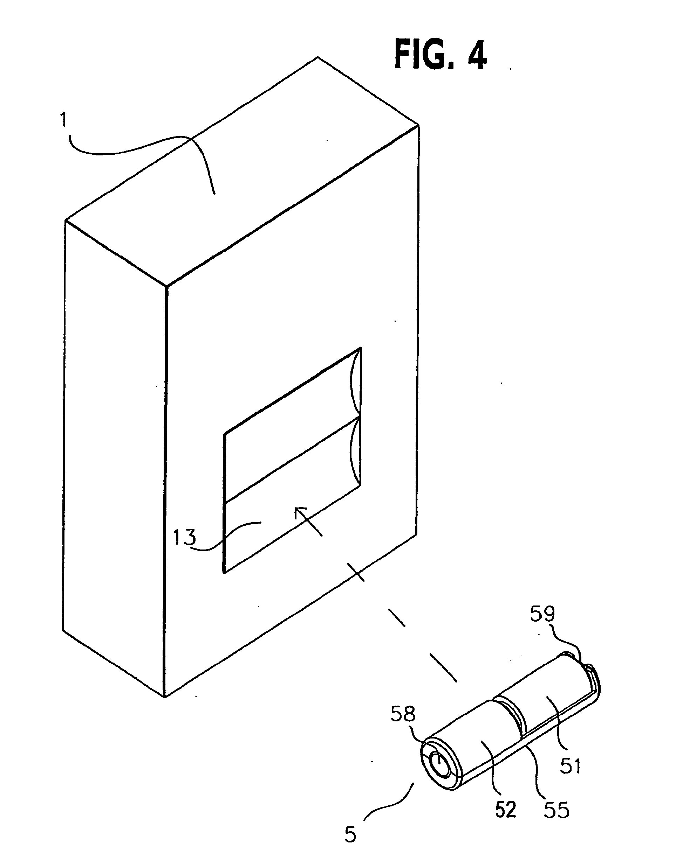

As shown in fig. 4, the infrared remote controller 1 comprises one or a plurality of battery chambers 13 for receiving standard batteries, such as AA-sized or AAA-sized battery. The battery module transceiver 5 is comprised of a housing 55 having the first transceiver 52, the battery power supply 51, a negative electrode 58 and a positive electrode 59. It should be noted that the size of the battery module transceiver 5 is the same as that of the battery used in the infrared remote controller 1. Therefore, the battery module transceiver 5 can directly be put into the battery chamber 13 and become part of he battery power supply assembly to provide power to the infrared remote controller 1.

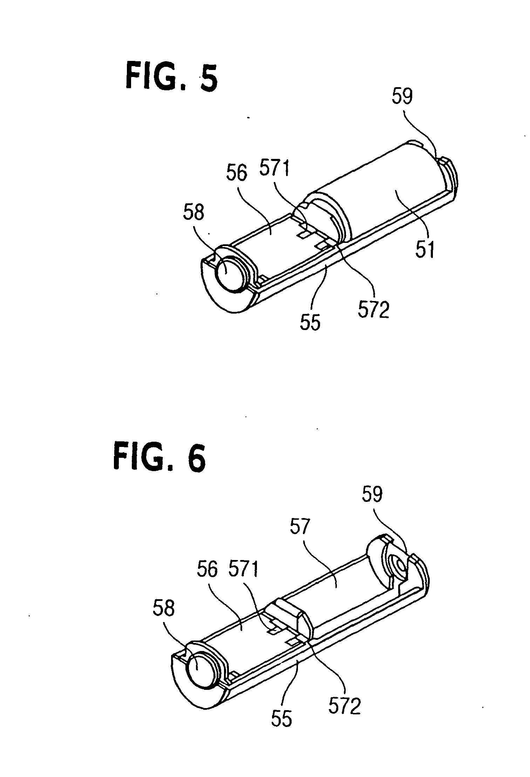

Referring to Fig. 5 and Fig. 6, a first compartment 56 and a second compartment 57 is formed in the housing 55. The battery power supply 51 is received within the first compartment 56 and is electrically connected to the negative electrode 58 and the positive electrode 59 respectively. The battery power supply 51, of course, should be chosen to contain a smaller size battery so as to fit in the first compartment 56. Furthermore, extended pads 571 and 572 are formed on the surface of the second compartment 57. When the first transceiver 52 is put into the second compartment 57, the extended pads 571 and 572 are electrically connected to the battery power supply 51 so that it can provide the power for the first transceiver 52 and further for the infrared remote controller 1. The first transceiver 52 is received within the second compartment 57 so that it can detect the RF pulses 4 and convert the same into radio waves 7.

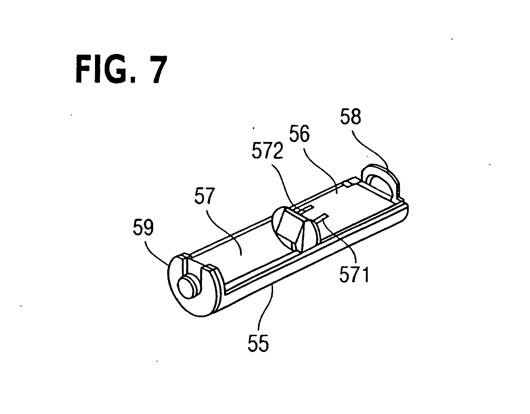

Fig. 7 shows a perspective view of another example of the battery module transceiver 5. The housing of the battery module transceiver 5 has a first compartment 56, a second compartment 57, a positive electrode 59 and a negative electrode 58. As shown in Fig. 7, the battery power supply 51 is received within the second compartment 57 and is elastically connected to the negative electrode 58 and the positive electrode 59 respectively. Furthermore, extended pads 571 and 572 are formed on the surface of the first compartment 56, the extended pads 571 and 572 are electrically connected to the battery power supply 51 so that it can provide the power to the first transceiver 52 and further for the infrared remote controller 1. The transceiver 52 is received within the first compartment 56 so that it can detect the RF in and around the remote controller.

In this case, the battery module transceiver 5 which includes the first transceiver 52 is configured as a replacement for at least one battery inside the IR remote controller 1 so as to detect the RF pulses 4 more effectively. In another preferred embodiment, the first transceiver 52 can be also integrated into housing 55 so that it is more convenient to use the battery module transceiver. In addition, the user can carry the IR remote controller 1 anywhere in the area to control the device 2. An alternative embodiment for the present invention further comprises an external battery having a voltage more than 1.5 V. The external battery is in conjunction with the battery module transceiver 5 for use in the infrared remote controller 1. Therefore, the external battery can provide power to the infrared remote controller 1 while the battery power 51 provides power to the first transceiver 52. In such case, a longer life of the battery 51 for the transceiver 52 can be obtained.

Therefore, the present invention allows the user to carry the IR remote controller 1 to different rooms and control the device 2. This is unlike other remote extenders that detect the IR signal and convert it to radio waves. To the contrary, the extending apparatus of the present invention detects the 30-50 kHz pulses 4 when one button 12 is pressed on the IR remote controller 1 and turns these pulses into corresponding radio waves. Therefore, the present invention offers several advantages from those using the IR to UHF conversion methods. For example, the present invention has the advantages of not being affected by ambient light, not covering the existing IR emitter on the remote controller and not using remote control IR detection.

The detection of RF may be accomplished using a resistor and inductor in series with the power source of the IR remote controller to detect activation of the IR remote controller. The inductor experiences a voltage transient when the IR remote controller is activated by a user pushing a control location. The voltage is sensed to activate the RF transmitter.

Alternatively, a transmitter can be attached externally to the IR remote controller which detects the RF pulses emitted by the IR remote controller. A Velcro attachment (or similar method) may be used to attach the transmitter.

Finally, the transmitter can be placed inside a battery pack that replaces more than one battery. All the batteries are removed from the remote controller and the battery pack with the transmitter built therein is inserted in replacement of the original batteries. Thus, a battery pack is then removed and recharged when the batteries are depleted.

While the invention has been described with reference to various illustrative embodiments, the description is not intended to be construed in a limiting sense. Various modifications of the illustrative embodiments, as well as other embodiments of the invention, will be apparent to those persons skilled in the art upon reference to this description. It is therefore contemplated that the appended claims will cover any such modifications or embodiments as may fall within the scope of the invention defined by the following claims.

## Claims

1. A battery form factor transceiver module (5) for extending the operational range of an infrared remote controller (1), comprising:
- a transceiver (52) having means (52') adapted for detecting radio frequency pulses (4) accompanying an infrared signal (3) generated by said infrared remote controller (1) and means (53) adapted for generating a radio frequency signal (7) corresponding to said radio frequency pulses (4) and being representative of said infrared signal (3).

2. Battery form factor transceiver module (5) according to claim 1, wherein said means (52') adapted for detecting radio frequency pulses (4) is a detector, and wherein said means (53) adapted for generating a radio frequency signal (7) is a transmitter (53).

3. Battery form factor transceiver module (5) according to claim 1, further comprising:
- a battery power supply (51) adapted for providing power to said transceiver module (5).

4. Battery form factor transceiver module (5) according to claim 1, further comprising:
- an antenna (54) adapted for radiating said radio frequency signal (7).

5. Battery form factor transceiver module (5) according to claim 3, wherein said transceiver module (5) is formed with a housing (55) having two compartments (56, 57) wherein said transceiver (52) and said battery power supply (51), respectively, are received.

6. Battery form factor transceiver module (5) according to claim 5, wherein both ends of said housing (55) are electrically connected to the battery power supply (51) so as to form a positive electrode (59) and a negative electrode (58), respectively.

7. Battery form factor transceiver module (5) according to claim 1, wherein the size of said transceiver module (5) fits a battery chamber (13) of the infrared remote controller (1).

8. Battery form factor transceiver module (5) according to claim 3, wherein said battery power supply (51) is replaceable.

9. System for extending the operational range of an infrared remote controller (1), comprising:
- a battery form factor transceiver module (5) for extending the operational range of said infrared remote controller (1), comprising
- a transceiver (52) having means (52') adapted for detecting radio frequency pulses (4) accompanying an infrared signal (3) generated from said infrared remote controller (1) and means (53) adapted for generating a radio frequency signal (7) corresponding to said radio frequency pulses (4);
- a second transceiver module (6), comprising
- a second antenna (60) adapted for receiving said radio frequency signal (7);
- a radio frequency detector (61);
- a power supply (62);
- a signal processor (63); and
- an infra-red emitter (64);
said second transceiver module (6) being adapted for converting said received radio frequency signal (7) to an infrared signal (8) which corresponds to said infrared signal (3) generated by said infrared remote controller (1).

10. System according to claim 9, wherein said means (52') adapted for detecting radio frequency pulses (4) is a detector, and wherein said means adapted for generating a radio frequency signal (7) is a transmitter (53).

11. System according to claim 9, wherein said battery form factor transceiver module (5) further comprises:
- a battery power supply (51) adapted for providing power to said transceiver module (5).

12. System according to claim 9, wherein said battery form factor transceiver module (5) further comprises:
- an antenna (54) adapted for radiating said radio frequency signal (7).

13. System according to claim 11, wherein said battery form factor transceiver module (5) is formed with a housing (55) having two compartments (56, 57) wherein said battery power supply (51) and said transceiver (52), respectively, are received.

14. System according to claim 13, wherein both ends of said housing (55) are electrically connected to the battery power supply (51) so as to form a positive electrode (59) and a negative electrode (58), respectively.

15. System according to claim 9, wherein the size of said battery form factor transceiver module (5) fits a battery chamber (13) of the infrared remote controller (1).

16. System according to claim 11, wherein said battery power supply (51) is replaceable.

17. Method for extending the operational range of an infrared remote controller (1), comprising:
- detecting radio frequency pulses (4) accompanying an infrared signal (3) generated by said infrared remote controller (1); and
- generating a radio frequency signal (7) corresponding to said radio frequency pulses (4) and being representative of said infrared signal (3).

18. Method according to claim 17, further comprising:
- receiving said radio frequency signal (7); and
- converting said received radio frequency signal (7) to an infrared signal (8) which corresponds to said infrared signal (3) generated by said infrared remote controller (1).

## Patentansprüche

1. Batterie-Form-Faktor-Sendeempfänger-Modul (5) zum Ausweiten des Arbeitsbereichs einer Infrarot-Fembedienungs-Steuerung (1), umfassend:
- einen Sende-Empfänger (52) mit Mitteln (52'), welche angepasst sind, Funk-Frequenz-Pulse (4) zu erfassen, welche ein Infrarot-Signal (3) begleiten, das von der Infrarot-Fernbedienungs-Steuerung (1) erzeugt wird, und Mittel (53), welche angepasst sind, ein Funk-Frequenz-Signal (7) zu erzeugen, das den Funk-Frequenz-Pulsen (4) entspricht und das Infrarot-Signal (3) repräsentiert.

2. Batterie-Form-Faktor-Sendeempfänger-Modul (5) nach Anspruch 1, wobei die Mittel (52'), welche angepasst sind, Funk-Frequenz-Pulse (4) zu erfassen, ein Detektor sind und wobei die Mittel (53), welche angepasst sind, ein Funk-Frequenz-Signal (7) zu erzeugen, ein Sender (53) sind.

3. Batterie-Form-Faktor-Sendeempfänger-Modul (5) nach Anspruch 1, weiter umfassend:
- eine Batterie-Stromversorgung (51), welche angepasst ist, Strom an das Sende-Empfänger-Modul (5) zu liefern.

4. Batterie-Form-Faktor-Sendeempfänger-Modul (5) nach Anspruch 1, weiter umfassend:
- eine Antenne (54), welche angepasst ist, das Funk-Frequenz-Signal (7) auszustrahlen.

5. Batterie-Form-Faktor-Sendeempfänger-Modul (5) nach Anspruch 3, wobei das Sende-Empfänger-Modul (5) mit einem Gehäuse (55) ausgebildet wird, welches zwei Abteilungen (56, 57) aufweist, worin der Sende-Empfänger (52) bzw. die Batterie-Stromversorgung (51) aufgenommen sind.

6. Batterie-Form-Faktor-Sendeempfänger-Modul (5) nach Anspruch 5, wobei beide Enden des Gehäuses (55) elektrisch mit der Batterie-Stromversorgung (51) verbunden sind, um eine positive Elektrode (59) bzw. eine negative Elektrode (58) zu bilden.

7. Batterie-Form-Faktor-Sendeempfänger-Modul (5) nach Anspruch 1, wobei die Größe des Sende-Empfänger-Moduls (5) mit einem Batterie-Fach (13) der Infrarot-Fernbedienungs-Steuerung (1) zusammenpasst.

8. Batterie-Form-Faktor-Sendeempfänger-Modul (5) nach Anspruch 3, wobei die Batterie-Stromversorgung (51) austauschbar ist.

9. System zum Ausweiten des Arbeitsbereichs einer Infrarot-Fembedienungs-Steuerung (1), umfassend:
- ein Batterie-Form-Faktor-Sendeempfänger-Modul (5) zum Ausweiten des Arbeitsbereichs der Infrarot-Fernbedienungs-Steuerung (1), umfassend
- einen Sende-Empfänger (52) mit Mitteln (52'), welche angepasst sind, Funk-Frequenz-Pulse (4) zu erfassen, welche ein Infrarot-Signal (3) begleiten, das von der Infrarot-Fernbedienungs-Steuerung (1) erzeugt wird, und Mittel (53), welche angepasst sind, ein Funk-Frequenz-Signal (7) zu erzeugen, das den Funk-Frequenz-Pulsen (4) entspricht;
- ein zweites Sende-Empfänger-Modul (6), umfassend
- eine zweite Antenne (60), welche angepasst ist, das Funk-Frequenz-Signal (7) zu empfangen;
- einen Funk-Frequenz-Detektor (61);
- eine Stromversorgung (62);
- einen Signal-Prozessor (63); und
- einen Infrarot-Emitter (64);
wobei das Sende-Empfänger-Modul (6) angepasst ist, das empfangene Funk-Frequenz-Signal (7) in ein Infrarot-Signal (8) zu konvertieren, welches dem Infrarot-Signal (3) entspricht, das von der Infrarot-Fernbedienungs-Steuerung (1) erzeugt wird.

10. System nach Anspruch 9, wobei das Mittel (52'), welches angepasst ist, Funk-Frequenz-Pulse (4) zu erfassen, ein Detektor ist und wobei das Mittel, welches angepasst ist, ein Funk-Frequenz-Signal (7) zu erzeugen, ein Sender (53) ist.

11. System nach Anspruch 9, wobei das Batterie-Form-Faktor-Sendeempfänger-Modul (5) weiter umfasst:
- eine Batterie-Stromversorgung (51), welche angepasst ist, Strom an das Sende-Empfänger-Modul (5) zu liefern.

12. System nach Anspruch 9, wobei das Batterie-Form-Faktor-Sendeempfänger-Modul (5) weiter umfasst:
- eine Antenne (54), welche angepasst ist, das Funk-Frequenz-Signal (7) auszustrahlen.

13. System nach Anspruch 11, wobei das Batterie-Form-Faktor-Sendeempfänger-Modul (5) mit einem Gehäuse (55) ausgebildet wird, welches zwei Abteilungen (56, 57) aufweist, worin die Batterie-Stromversorgung (51) bzw. der Sende-Empfänger (52) aufgenommen sind.

14. System nach Anspruch 13, wobei beide Enden des Gehäuses (55) elektrisch mit der Batterie-Stromversorgung (51) verbunden sind, um eine positive Elektrode (59) bzw. eine negative Elektrode (58) zu bilden.

15. System nach Anspruch 9, wobei die Größe des Sende-Empfänger-Moduls (5) mit einem Batterie-Fach (13) der Infrarot-Fernbedienungs-Steuerung (1) zusammenpaßt.

16. System nach Anspruch 11, wobei die Batterie-Stromversorgung (51) austauschbar ist.

17. Verfahren zum Ausweiten des Arbeitsbereichs einer Infrarot-Fernbedienungs-Steuerung (1), umfassend:
- Erfassen von Funk-Frequenz-Pulsen (4) welche ein Infrarot-Signal (3) begleiten, das von der Infrarot-Fembedienungs-Steuerung (1) erzeugt wird;
- Erzeugen eines Funk-Frequenz-Signals (7), das den Funk-Frequenz-Pulsen (4) entspricht und fiir das Infrarot-Signal repräsentativ ist.

18. Verfahren nach Anspruch 17, weiter umfassend:
- Empfangen des Funk-Frequenz-Signals (7); und
- Konvertieren des empfangenen Funk-Frequenz-Signals (7) in ein Infrarot-Signal (8), welches sich dem Infrarot-Signal (3) entspricht, das von der Infrarot-Fembedienungs-Steuerung (1) erzeugt wird.

## Revendications

1. Module émetteur-récepteur de facteur sous forme de pile (5) destiné à étendre la portée opérationnelle d'une télécommande à infrarouge (1), comprenant :
un émetteur-récepteur (52) doté d'un moyen (52') adapté pour détecter les impulsions de radiofréquence (4) accompagnant un signal infrarouge (3) généré par ladite télécommande à infrarouge (1) et un moyen (53) adapté pour générer un signal de radiofréquence (7) correspondant auxdites impulsions de radiofréquence (4) et étant représentatif dudit signal infrarouge (3).

2. Module émetteur-récepteur de facteur sous forme de pile (5) selon la revendication 1, dans lequel ledit moyen (52') adapté pour détecter les impulsions de radiofréquence (4) est un détecteur, et dans lequel ledit moyen (53) adapté pour générer un signal de radiofréquence (7) est un émetteur-récepteur (53).

3. Module émetteur-récepteur de facteur sous forme de pile (5) selon la revendication 1, comprenant également :
une alimentation par pile (51) adaptée pour fournir l'énergie audit module émetteur-récepteur (5).

4. Module émetteur-récepteur de facteur sous forme de pile (5) selon la revendication 1, comprenant également :
une antenne (54) adaptée pour rayonner ledit signal de radiofréquence (7).

5. Module émetteur-récepteur de facteur sous forme de pile (5) selon la revendication 3, dans lequel ledit module émetteur-récepteur (5) est formé d'un logement (55) comportant deux compartiments (56, 57) dans lesquels ledit émetteur-récepteur (52) et ladite alimentation par pile (51), respectivement, sont reçus.

6. Module émetteur-récepteur de facteur sous forme de pile (5) selon la revendication 5, dans lequel les deux extrémités dudit logement (55) sont connectées électriquement à l'alimentation par pile (51) de façon à former une électrode positive (59) et une électrode négative (58), respectivement.

7. Module émetteur-récepteur de facteur sous forme de pile (5) selon la revendication 1, dans lequel la taille dudit module émetteur-récepteur (5) s'adapte à une chambre de pile (13) de la télécommande à infrarouge (1).

8. Module émetteur-récepteur de facteur sous forme de pile (5) selon la revendication 3, dans lequel ladite alimentation par pile (51) est remplaçable.

9. Système pour l'extension de la portée opérationnelle d'une télécommande à infrarouge (1), comprenant :
un module émetteur-récepteur de facteur sous forme de pile (5) destiné à étendre la portée opérationnelle de ladite télécommande à infrarouge (1), comprenant :
un émetteur-récepteur (52) comprenant un moyen (52') adapté pour détecter les impulsions de radiofréquence (4) accompagnant un signal infrarouge (3) généré par ladite télécommande à infrarouge (1) et un moyen (53) adapté pour générer un signal de radiofréquence (7) correspondant auxdites impulsions de radiofréquence (4) ;
un second module émetteur-récepteur (6) comprenant :
une seconde antenne (60) adaptée pour recevoir ledit signal de radiofréquence (7) ;
un détecteur de radiofréquence (61) ;
une alimentation (62) ;
un processeur de signal (63) ; et
un émetteur infrarouge (64) ;
ledit second module émetteur-récepteur (6) étant adapté pour convertir ledit signal de radiofréquence (7) reçu en signal infrarouge (8) correspondant au dit signal infrarouge (3) généré par ladite télécommande à infrarouge (1).

10. Système selon la revendication 9, dans lequel ledit moyen (52') adapté pour détecter les impulsions de radiofréquence (4) est un détecteur, et dans lequel ledit moyen adapté pour générer un signal de radiofréquence (7) est un émetteur-récepteur (53).

11. Système selon la revendication 9, dans lequel ledit module émetteur-récepteur de facteur sous forme de pile (5) comprend également :
une alimentation par batterie (51) adaptée pour fournir l'énergie au dit module émetteur-récepteur (5).

12. Système selon la revendication 9, dans lequel ledit module émetteur-récepteur de facteur sous forme de pile (5) comprend également :
une antenne (54) adaptée pour rayonner ledit signal de radiofréquence (7).

13. Système selon la revendication 11, dans lequel ledit module émetteur-récepteur de facteur sous forme de pile (5) est formé d'un logement (55) comprenant deux compartiments (56, 57) dans lesquels ladite alimentation par batterie (51) et ledit émetteur-récepteur (52), respectivement, sont reçus.

14. Système selon la revendication 13, dans lequel les deux extrémités dudit logement (55) sont connectées électriquement à l'alimentation par batterie (51) de façon à former une électrode positive (59) et une électrode négative (58), respectivement.

15. Système selon la revendication 9, dans lequel la taille dudit module émetteur-récepteur de facteur sous forme de pile (5) s'adapte à une chambre de batterie (13) de la télécommande à infrarouge (1).

16. Système selon la revendication 11, dans lequel ladite alimentation par batterie (51) est remplaçable.

17. Procédé destiné à étendre la portée opérationnelle de la télécommande à infrarouge (1), comprenant :
la détection des impulsions de radiofréquence (4) accompagnant un signal infrarouge (3) généré par ladite télécommande à infrarouge (1) ; et
générer un signal de radiofréquence (7) correspondant auxdites impulsions de radiofréquence (4) et étant représentatif dudit signal infrarouge (3).

18. Procédé selon la revendication 17, comprenant également :
la réception dudit signal de radiofréquence (7) ; et
la conversion dudit signal de radiofréquence (7) reçu en signal infrarouge (8) correspondant au dit signal infrarouge (3) généré par ladite télécommande à infrarouge (1).
